# EUROPÄISCHE PATENTSCHRIFT

(11) **EP 1 348 000 B1**
(45) Veröffentlichungstag und Bekanntmachung des Hinweises auf die Patenterteilung: **24.03.2010**
(21) Anmeldenummer: 01992731.8
(22) Anmeldetag: 24.10.2001
(51) Int. Cl.: C08G 18/67, C08G 18/80, C09D 175/16

(54) **VERFAHREN ZUR BESCHICHTUNG VON SUBSTRATEN**
METHOD FOR COATING SUBSTRATES
PROCEDE POUR RECOUVRIR DES SUBSTRATS

(30) Priorität: 06.11.2000 DE 10054933
(43) Veröffentlichungstag der Anmeldung: 01.10.2003
(73) Patentinhaber: Bayer MaterialScience AG, 51368 Leverkusen (DE)
(72) Erfinder: BAUMBACH, Beate, 51373 Leverkusen (DE); FISCHER, Wolfgang, 40668 Meerbusch (DE); FÜSSEL, Christian, 47918 Tönisvorst (DE); RAPPEN, Diethelm, 47495 Rheinberg (DE); WEIKARD, Jan, 51519 Odenthal-Erberich (DE)
(86) Internationale Anmeldenummer: PCT/EP2001/012259
(87) Internationale Veröffentlichungsnummer: WO 2002/036657

(56) Entgegenhaltungen:
- EP-A- 0 501 433
- EP-A- 0 902 040
- GB-A- 2 107 334
- US-A- 4 366 109

## Beschreibung

Die Erfindung betrifft ein Verfahren zur Beschichtung eines Substrates, bei dem bestimmte flüssige Beschichtungsmittelzusammensetzungen nach dem Auftragen auf einen Körper (Substrat) durch Bestrahlung mit ultraviolettem (UV)-Licht und thermische Nachreaktion gehärtet werden.

Die Härtung von Beschichtungen, z.B. von Lacken, durch UV-Licht ist wegen des geringen Energie- und Lösungsmittelverbrauchs und der hohen Geschwindigkeit sehr effizient. Als ein Nachteil wird jedoch häufig eine unzureichende Haftung der Beschichtungen auf bestimmten Untergründen, unter anderem auf Metall, angegeben. Zum Beispiel die EP-A 0 928 800 beschreibt ein Beschichtungssystem aus UVhärtenden Isocyanatgruppen aufweisenden Urethan(meth)acrylatisocyanaten, welches freie Isocyanat(NCO)-Gruppen und mit NCO-Gruppen reaktive Gruppen aufweist. Aus diesem Grund wird das vorgenannte Beschichtungssystem als zwei Komponenten hergestellt, die erst kurz vor dem Auftragen der Beschichtungen gemischt werden. Nach dem Mischen ist die Verwendbarkeit auf einige Stunden begrenzt.

Ein im Sinne der Lagerung der flüssigen Beschichtungszusammensetzung (Beschichtungsmittel) einkomponentiges System wird z.B. in der US-A 4 961 960 beschrieben. Das System besteht im wesentlichen aus a) einem photohärtbaren Monomer oder Polymer mit einer Mehrzahl von ethylenisch ungesättigten Gruppen und b) einem Addukt aus einem Polyisocyanat, einem Blockierungsmittel für Polyisocyanate und einem photo-polymerisierbaren Alkohol mit mindestens einer ethylenisch ungesättigten Gruppe. Weiterhin wird die Einschränkung gemacht, dass die Komponente a) frei von NCO- oder blockierten NCO-Gruppen ist und dass die Summe der in a) und b) enthaltenen ethylenisch ungesättigten Gruppen mindestens 4 ist. Es wird beschrieben, dass der Einsatz von Polyisocyanaten b), die keine ethylenisch ungesättigte(n) Gruppe(n) aufweisen, ohne thermische Nachhärtung zu nicht beständigen Filmen und mit thermischer Nachhärtung zu Filmen mit unzureichender Optik führt.

Da Polyisocyanat-Produkte, die sowohl ethylenisch ungesättigte Gruppen als auch blockierte NCO-Gruppen enthalten, schwierig herzustellen sind, bestand nun die Aufgabe der Erfindung darin, ein Verfahren zur Beschichtung bereitzustellen, das auch bei Verwendung von blockierten Polyisocyanaten in Kombination mit UVhärtbaren Oligomeren oder Polymeren zu nach UV-Härtung beständigen Beschichtungen und nach zusätzlicher thermischer Härtung zu optisch einwandfreien Beschichtungen führt.

US-A 4366109 ist auf Beschichtungen mit guten optischen Eigenschaften gerichtet, beschreibt jedoch lediglich einen thermischen Härtungsschritt zur Aushärtung der Beschichtungssysteme.

EP-A 0501433 beschäftigt sich mit der Verbesserung der Löslichkeit von Beschichtungssystemen, die der Herstellung lichtempfindlicher Beschichtungen dienen. In diesem Zusammenhang wird u.a. ein Beschichtungssystem auf Basis eines trifunktionellen Acrylats (Beispiel 2) offenbart. Syteme auf Basis von Epoxyacrylaten mit bis zu vier ethylenisch ungesättigten Gruppen werden nicht offenbart.

Gegenstand der Erfindung ist ein Verfahren zur Beschichtung eines Substrates durch Auftragen eines Beschichtungsmittels, bestehend aus mindestens
A) mindestens einer mindestens zwei (Meth)acrylatgruppen enthaltenden Verbindung, die frei von Isocyanatgruppen und blockierten Isocyanatgruppen ist,
B) mindestens einem blockierten Polyisocyanat und
C) mindestens einem Photoinitiator,
anschließender Härtung durch Einwirken von UV-Licht und Nachhärtung durch Erhöhung der Temperatur der Beschichtung, dadurch gekennzeichnet, dass Komponente A) mindestens eine mit Isocyanatgruppen reaktive Gruppe enthält und Komponente B) keine ethylenisch ungesättigten Gruppen enthält,
dadurch gekennzeichnet,
dass als Komponente A) ein Epoxyacrylat mit bis zu vier ethylenisch ungesättigten Gruppen eingesetzt wird.

Die Bezeichnung "(Meth)acrylat" bezieht sich im Sinne der Erfindung auf Ester der Acrylsäure und/oder der Methacrylsäure sowie deren Mischungen.

Das Epoxyacrylat A) enthält mindestens eine mit Isocyanaten reaktive Gruppe, bevorzugt mindestens eine Hydroxylgruppe. Bevorzugt werden Epoxyacrylate eingesetzt, die vorzugsweise im Mittel 1,5 bis 3 Hydroxylgruppen besitzen.

Bei der Herstellung der Epoxyacrylate, beispielsweise beschrieben in P. K. T. Oldring (Ed.), Chemistry & Technology of UV & EB Formulations For Coatings, Inks & Paints, Vol. 2, 1991, SITA Technology, London, S. 37 - 68 und in EP-A816412, werden üblicherweise Glycidylether mit Carbonsäuren umgesetzt, wobei Produkte mit sekundären Hydroxylgruppen entstehen. Solche Produkte sind vorzugsweise geeignet für das erfindungsgemäße Verfahren.

Es können auch Umsetzungsprodukte der genannten Epoxyacrylate, mit Di- oder Polyisocyanaten zum Einsatz kommen, solange die Umsetzungsprodukte mindestens eine mit Isocyanaten reaktive Gruppe bevorzugt mindestens eine Hydroxylgruppe enthalten. Als Di- oder Polyisocyanate sind grundsätzlich aliphatische, araliphatische und aromatische Verbindungen geeignet, z.B. Butylendiisocyanat, Hexamethylendiisocyanat (HDI), Isophorondisocyanat (IPDI), Trimethylhexamethylendiisocyanat (=2,2,4 und/oder 2,4,4-Trimethylhexamethylendiisocyanat), Di(isocyanatocyclohexyl)methan, Toluendiisocyanat, Diphenylmethandiisocyanat, Isocyanatomethyl-1,8-octandiisocyanat oder deren Derivate mit Urethan-, Isocyanurat-, Allophanat-, Biuret-, Uretdion-, Iminooxadiazindionstruktur und Mischungen derselben.

Blockierte Polyisocyanate der Komponente B), die keine ethylenisch ungesättigten Gruppen enthalten, sind bekannt und beispielsweise beschrieben in Progress in Organic Coatings, Vol 36, 3, 1999, 148-172. Blockierte Polyisocyanate werden typischerweise durch Reaktion eines Polyisocyanats mit einem Blockierungsmittel hergestellt.

Als Polyisocyanate sind grundsätzlich aliphatische, araliphatische und aromatische Verbindungen geeignet, wobei aliphatische Verbindungen bevorzugt sind, z.B. Butylendiisocyanat, Hexamethylendiisocyanat (HDI), Isophorondiisocyanat (IPDI), Trimethylhexamethylendiisocyanat (=2,2,4 und/oder 2,4,4-Trimethylhexamethylendiisocyanat), Di(isocyanatocyclohexyl)methan, Isocyanatomethyl-1,8-octandiisocyanat oder deren Derivate mit Urethan-, Isocyanurat-, Allophanat-, Biuret-, Uretdion-, Iminooxadiazindionstruktur und Mischungen derselben. Besonders bevorzugt werden die Derivate von HDI und/oder IPDI mit Isocyanurat-Struktureinheiten.

Als Blockierungsmittel können die bekannten monofunktionellen Blockierungsmittel, wie z.B. Malonsäureester, Acetessigsäureester, Lactame, Oxime, Pyrazole, Triazole, Imidazole, Amine oder beliebige Gemische dieser Verbindungsklassen, eingesetzt werden. Bevorzugt eingesetzt werden Blockierungsmittel, die im Temperaturbereich bis 180°C, insbesondere bis 160°C abspalten. Bevorzugt sind Diisopropylamin, Butanonoxim, Cyclohexanonoxim und/oder 3,5-Dimethyl-pyrazol. Besonders bevorzugt ist Diisopropylamin.

Das Verhältnis von blockierten NCO-Gruppen in B) zu mit NCO-Gruppen reaktiven Gruppen in A) beträgt von 1 : 0,2 bis 1 : 2, bevorzugt von 1 : 0,5 bis 1 :1,2 und besonders bevorzugt von 1 : 0,9 bis 1 : 1.

Photoinitiatoren C) sind an sich bekannte Initiatoren, die eine radikalische Polymerisation nach Bestrahlen mit energiereicher Strahlung wie zum Beispiel UV-Licht auslösen können. Solche Photoinitiatoren sind beispielsweise beschrieben in P. K. T. Oldring (Ed.), Chemistry & Technology of UV & EB Formulations For Coatings, Inks & Paints, Vol. 3, 1991, SITA Technology, London, S. 61-325. Als Beispiele seien aufgeführt 2-Hydroxyphenylketone wie z.B. 1-Hydroxycyclohexyl-phenylketon, Benzilketale wie z.B. Benzildimethylketal, Acylphospinoxide wie z.B. Bis-(2,4,6-trimethylbenzoyl)-phenylphosphinoxid, Diacylphosphinoxide, Benzophenon und dessen Derivate. Sie werden allein oder in Mischung gegebenenfalls auch zusammen mit weiteren Beschleunigern oder Coinitiatoren als Zusatz berechnet auf Festkörper des Beschichtungssystems in Mengen von 0,1 bis 10 Gew.-Teilen, bevorzugt 2 bis 7 Gew.-Teilen, besonders bevorzugt 3 bis 4 Gew.-Teilen verwendet.

Zur Herstellung des Beschichtungsmittels werden die Komponenten A), B) und C) nach üblichen Verfahren gemischt. Bestandteil der Mischung können weiterhin die in der Lackiertechnik, insbesondere der Technik strahlenhärtbarer Lacke und der Polyurethanchemie üblichen Hilfs- und Zuschlagsstoffe sein.

Zur Erzielung von Wetterstabilität der gehärteten Lackschicht und gegebenenfalls des Untergrundes kann ein UV-Absorber vorzugsweise mit einem Absorptionsbereich bis max. 390 nm und ein Stabilisator, der als HALS bekannt ist (HALS = "hindered amine light stabilisator"), zugegeben werden. Geeignete UV-Absorber sind vom Triphenyltriazintyp z.B. Tinuvin® 400 (Ciba) oder vom Typ der Oxalsäuredianilide z.B. Sanduvor® 3206 (Clariant). Die UV-Absorber werden vorzugsweise in Mengen von jeweils 0,5 bis 3,5 % bezogen auf festes Bindemittel zugegeben. Geeignete HALS sind die handelsüblichen Typen wie z.B. Tinuvin® 292 oder Tinuvin® 123 (Ciba) oder Sanduvor® 3058 (Clariant). Diese HALS werden bevorzugt in Mengen von 0,5 bis 2,5 % bezogen auf festes Bindemittel zugegeben. Die Verwendung von HALS und UV-Absorber in Kombination mit Photoinitiatoren ist bekannt und beispielsweise beschrieben in A. Valet, Lichtschutzmittel für Lacke, Vincentz Verlag, Hannover, 1996.

Die Additionsreaktion der bei der Nachhärtung freigesetzten Isocyanatgruppen mit den mit NCO-Gruppen reaktiven Bestandteilen kann in an sich bekannter Weise mittels geeigneter Katalysatoren, wie beispielsweise Zinnoctoat, Dibutylzinndilaurat oder tertiären Aminen beschleunigt werden.

### Als weitere Lackadditive seien beispielhaft genannt:

Entlüftungsmittel wie Polyacrylate, Haftvermittler wie Aminoalkyltrialkoxysilane und Verlaufsmittel wie Polysiloxane.

Neben der Herstellung von Klarlacken sind durch Zusatz von Farbstoffen oder Pigmenten auch farbige Beschichtungsmittel herstellbar. Wie dem Fachmann bekannt muss der Photoinitiator an farbige Beschichtungsmittel angepasst werden z.B. durch anteilige Verwendung eines Photoinitiators mit langwelliger (>350 nm) Absorptionsbande.

Je nach gewähltem Auftragsverfahren kann die Viskosität des Beschichtungsmittels durch Zugabe von Lösungsmitteln passend eingestellt werden. Geeignete Lösemittel sind Lösemittel, die gegenüber blockierten Isocyanatgruppen und C=C-Doppelbindungen inert sind, wie z.B. Ester, Ketone, Ether, Etherester, Alkane, oder aromatische Lösemittel wie Xyole oder Toluol.

Bei der erfindungsgemäßen Beschichtung eines Substrats wird das Beschichtungsmittel durch die üblichen Techniken wie beispielsweise durch Spritzen, Walzen, Rakeln, Gießen, Streichen, Schleudern oder Tauchen, bevorzugt durch Spritzen und Walzen auf unterschiedlichste Substrate appliziert. Solche Substrate sind beispielsweise Glas, Metall, z.B. Aluminium- oder Stahlbleche, die man gegebenenfalls einer Vorbehandlung unterzogen hat, Metall auch in Form von sogenannten "Coils", temperaturunempfindliche Holz- oder Kunststoffwerkstoffe, mineralische Werkstoffe, z.B. Zement, Ton, Mineralien, Keramik oder solche Substrate aus den genannten Werkstoffen, die bereits beschichtet worden sind, z.B. Automobile oder Automobilteile. Es können auch Substrate, die aus mehreren der genannten Materialien bestehen, beschichtet werden.

Die Aushärtung des aufgetragenen Beschichtungssystems erfolgt in aufeinanderfolgenden Schritten:
Schritt 1: Durch Ablüftung gegebenenfalls zugegebener Lösemittel. Dies erfolgt bei Raumtemperatur oder erhöhter Temperatur, vorzugsweise bis 80°C. Eventuell auch durch einen Strom erwärmten Gases (z.B. Luft). Die Temperaturerhöhung kann durch bekannte Verfahren wie Infrarot- oder Nahinfrarotstrahler oder durch auf andere Arten beheizte Öfen bewerkstelligt werden.
Schritt 2: Durch UV-Härtung, geeignet sind handelsübliche Quecksilber-Hoch- bzw. Mitteldruckstrahler. Diese Strahler können durch andere Elemente dotiert sein und weisen bevorzugt eine Leistung von 80 bis 240 W/cm Lampenlänge auf. Auch Eximerstrahler, die UV-Licht mit Wellenlängen zwischen 160 und 400 nm emittieren, sind geeignet. Überraschenderweise wurde gefunden, dass, obwohl die Beschichtung zu diesem Zeitpunkt noch den unvernetzten Bestandteil B) enthält, schon staubtrockene und gegen viele Lösungsmittel beständige Oberflächen vorliegen.
Schritt 3: Durch Vernetzung der NCO-haltigen Bestandteile mit den mit NCO-haltigen Bestandteilen reaktiven Bestandteilen. Dazu werden durch erhöhte Temperaturen in der Beschichtung zunächst aus den blockierten Isocyanaten wieder reaktive Gruppen, bevorzugt NCO-Gruppen, hergestellt. Dies erfolgt bei Temperaturen oberhalb von 80°C und unterhalb von 450°C. Die Verweilzeiten der Beschichtungen bei diesen Temepraturen betragen mindestens 10 Sekunden , vorteilhaft mindestens 60 Sekunden bis 60 Minuten und besonders vorteilhaft mindestens 2 bis 10 Minuten. Die Temperaturerhöhung kann durch bekannte Verfahren wie Infrarot- oder Nahinfrarotstrahler oder durch auf andere Arten beheizte Öfen bewerkstelligt werden. Nach Ende der Nachhärtung kann sich eine Abkühlphase anschließen, bevor die beschichteten Gegenstände weiter gehandhabt werden.

Es war überraschend, dass bei der Nachhärtung die bei der Deblockierung der NCO-Gruppen entstehenden und bei diesen Temperaturen flüchtigen Blockierungsmittel nicht zu einer Störung des Films oder der Oberfläche führen. Wie auch die folgenden Beispiele illustrieren, entstehen störungsfreie, optisch anspruchsvolle Beschichtungen.

### Beispiele:

Die folgenden Rezepturen wurden hergestellt (Angaben in Gew.%), appliziert und geprüft.

| **Beispiel Nr.:** | **1** | **2** | **3** | **4** |
|---|---|---|---|---|
| Roskydal^{®} UA VP LS 2266 | 53,13 | 53,94 | | |
| Ebeeryl^{®} 600 | | | 51,39 | 52,96 |
| Irgacure^{®} 184 | 2,18 | 2,18 | 2,18 | 2,18 |
| Desmodur^{®} VP LS 2352 | 30,29 | | | |
| Desmodur^{®} BL 3370 | | 26,96 | | |
| Descnodur® VP LS 2307 | | | 35,70 | |
| Desmodur^{®} BL 3475 | | | | 26,47 |
| n-Butylacetat | 14,40 | 16,91 | 10,72 | 18,39 |
| Gesamt | 100,0 | 100,0 | 100,0 | 100,0 |
| Festgehalt | 75,0% | 75,0% | 75,0% | 75,0% |
| Auslaufzeit DIN4-Becher ca. | 70s | 70s | 70s | 70s |

### Anmerkungen:

Roskydal^{®} UA VP LS 2266 (Bayer AG, Leverkusen, Deutschland) - Epoxyacrylat, Viskosität ca. 8000 mPa s, Molekulargewicht ca. 700 g/Mol, Doppelbindungsdichte 5 val/kg.
Ebecryl^{®} 600 (UCB GmbH, Kerpen, Deutschland) - Epoxyacrylat auf Basis eines Bisphenol A Harzes, Viskosität ca. 3000 mPa s bei 60°C.
Irgacure^{®} 184 (Ciba Spezialitätenchemie, Lampertheim, Deutschland) - Photoinitiator.
Desmodur^{®} VP LS 2352 (Bayer AG, Leverkusen, Deutschland) - mit Amin blockiertes Polyisocyanat auf Basis HDI und IPDI [blockierter NCO-Gehalt 7,8 %, ca. 65 %ig in Solventnaphtha 100/1 -Methoxypropylacetat-2/Isobutanol (6,4:14,3:14,3)].
Desmodur^{®} BL 3370 (Bayer AG, Leverkusen, Deutschland) - mit Amin und Alkohol blockiertes Polyisocyanat auf Basis HDI (blockierter NCO-Gehalt 8,9 %, 70 %ig in 1-Methoxypropylacetat).
Desmodur^{®} VP LS 2307 (Bayer AG, Leverkusen, Deutschland) - mit Malonsäuredialkylester blockiertes aliphatisches Polyisocyanat auf Basis HDI, IPDI und Di(isocyanatocyclohexyl)methan (blockierter NCO-Gehalt 6,4 %, ca. 60 %ig in Isobutanol/1-Methoxypropylacetat-2 2:1).
Desmodur^{®} BL 3475 (Bayer AG, Leverkusen, Deutschland) - mit Alkohol blockiertes Polyisocyanat auf Basis HDI und IPDI (blockierter NCO-Gehalt 8,2 %, 75 %ig in Solventaphtha 100/Butylacetat 1:1).

Die Lackformulierungen wurden auf je 2 Aluminiumbleche aufgerakelt, und das Lösungsmittel wurde durch 5 min Ablüften bei Raumtemperatur weitgehend entfernt. Anschließend wurde mit UV-Licht gehärtet und die Beständigkeiten an je einem lackierten Blech geprüft. Die anderen Bleche wurden zusätzlich für 87 s bei 125°C im Umluftofen getrocknet. Die Beständigkeiten wurden erneut geprüft.

| **Beispiel** | **1** | **2** | **3** | **4** |
|---|---|---|---|---|
| **UV-Härtung**: 1 Hg-Hochdruckstrahler 120 W/cm, Bandgeschwindigkeit: 5m/min | | | | |
| **Schichtdicke µm** | 6-7 | 6-7 | 6-7 | 5-6 |
| **Oberfläche nach UV-Trocknung** | Grifftrocken | Grifftrocken | Grifftrocken | Grifftrocken |
| **Methylethylketon-Beständigkeit *** | 0 | 0 | 0 | 0 |
| **Isopropanol-Beständigkeit *** 10%ig H₂O /15 min nach UV Härtung | 0 | 0 | 0 | 0 |
| **Haftfestigkeit im Gitterschnitt*** | | | | |

| nach UV-Trocknung | 1 | 2 | 3 | 4 |
|---|---|---|---|---|
| nach UV-Trocknung + 87s bei 125°C | 0 | 0-1 | 0 | 0 |

| | | | | |
|---|---|---|---|---|
| * - Bewertung nach Noten 0 - sehr gut, 5 - schlecht. | | | | |

## Patentansprüche

1. Verfahren zur Herstellung einer Beschichtung durch Auftragen eines Beschichtungsmittels, bestehend aus mindestens
A) mindestens einer mindestens zwei (Meth)acrylatgruppen enthaltenden Verbindung, die frei von Isocyanatgruppen und blockierten Isocyanatgruppen ist,
B) mindestens einem blockierten Polyisocyanat und
C) mindestens einem Photoinitiator,
anschließender Härtung durch Einwirken von UV-Licht und Nachhärtung durch Erhöhung der Temperatur der Beschichtung, wobei Komponente A) mindestens eine mit Isocyanatgruppen reaktive Gruppe enthält und Komponente B) keine ethylenisch ungesättigten Gruppen enthält,
**dadurch gekennzeichnet,**
**dass** als Komponente A) ein Epoxyacrylat mit bis zu vier ethylenisch ungesättigten Gruppen eingesetzt wird.

2. Verfahren nach Anspruch 1, **dadurch gekennzeichnet, dass** das Polyisocyanat der Komponente B) mit Diisopropylamin blockiert ist.

## Claims

1. A process for the preparation of a coating by applying a coating composition consisting of at least
A) at least one compound containing, at least two (meth)acrylate groups which is free from isocyanate groups and blocked isocyanate groups,
B) at least one blocked polyisocyanate and
C) at least one photoinitiator,
followed by curing by the action of UV light and post-curing by increasing the temperature of the coating, wherein component A) contains at least one groupe which reacts with isocyanate groups and component B) contains no ethylenically unsaturated groups,
**characterised in that**
an epoxy acrylate having up to four ethylenically unsaturated groups is used as component A).

2. A process according to claim 1, **characterised in that** the polyisocyanate of component B) is blocked with diisopropylamine.

## Revendications

1. Procédé pour la préparation d'un revêtement par application d'un agent de revêtement constitué d'au moins
A) au moins un composé contenant au moins deux groupes (méth)acrylates, lequel est exempt de groupes isocyanates et de groupes isocyanates bloqués,
B) au moins un polyisocyanate bloqué et
C) au moins un photoinitiateur,
par durcissement subséquent par l'action de lumière UV et par durcissement ultérieur par élévation de la température du revêtement, le constituant A) contenant au moins un groupe réactif avec des groupes isocyanates et le constituant B) ne contenant pas de groupe éthyléniquement insaturé,
**caractérisé,**
**en ce que** l'on utilise comme constituant A) un époxyacrylate avec jusqu'à quatre groupes éthyléniquement insaturés.

2. Procédé selon la revendication 1, **caractérisé en ce que** le polyisocyanate du constituant B) est bloqué avec de la diisopropylamine.
